# EUROPEAN PATENT APPLICATION

(11) **EP 4 318 233 A1**
(43) Date of publication of application: **07.02.2024**
(21) Application number: 21936470.0
(22) Date of filing: 16.04.2021
(51) Int. Cl.: G06F 9/455

(54) **PROCESSING APPARATUS, PROCESSING METHOD AND RELATED DEVICE**

(71) Applicant: Huawei Technologies Co., Ltd., Shenzhen, Guangdong 518129 (CN)
(72) Inventor: XING, Shaoxu, Shenzhen, Guangdong 518129 (CN); DUAN, Lei, Shenzhen, Guangdong 518129 (CN); ZHENG, Qiaoshi, Shenzhen, Guangdong 518129 (CN); ZHANG, Zijing, Shenzhen, Guangdong 518129 (CN); WANG, Meiling, Shenzhen, Guangdong 518129 (CN)
(74) Representative: Gill Jennings & Every LLP
(86) International application number: PCT/CN2021/087848
(87) International publication number: WO 2022/217595

(57) **Abstract**

A processing apparatus and a processing method are provided. The processing apparatus includes a scheduler (201), a mapper (202), and M first processing units (203). The mapper corresponds to N second processing units (204). The processing apparatus is integrated on a first chip (200), and the N second processing units (204) are integrated on a second chip. The scheduler (201) is configured to receive a target task, the target task carries a chip identifier, and the chip identifier identifies a chip for executing the target task. The mapper (202) is configured to map computing resource status information of the N second processing units (204) to the first chip. The scheduler (201) is further configured to: determine one or more target processing units from the M first processing units (203) or the N second processing units (204) based on the chip identifier, computing resource status information fed back by the M first processing units (203), and the computing resource status information of the N second processing units (204) in the mapper; and send the target task to the one or more target processing units for execution. The processing apparatus can implement adaptive cross-chip task scheduling between chips.

## Description

### TECHNICAL FIELD

This application relates to the field of processor technologies, and in particular, to a processing apparatus, a processing method, and a related device.

### BACKGROUND

Currently, there are two types of artificial intelligence (artificial intelligence, AI) chips. One type is configured to break down a task based on an artificial intelligence network, and is called a primary chip. The other type is configured to perform computing work of the artificial intelligence network based on the task, and is called a secondary chip. A working mode is as follows. The primary chip delivers a task to the secondary chip. A task scheduler on the secondary chip may schedule, based on a type of the task and busy/idle states of computing resources on the current chip, the task to different computing resources for execution.

With development of artificial intelligence, computing power required by a task keeps increasing. The primary chip or the secondary chip can schedule only computing resources within the current chip. In some cases, due to limited computing resources of the current chip, valid computing resources cannot be allocated to a task, and as a result the task fails to be executed in time. For example, after the primary chip delivers a task to the secondary chip, because the secondary chip can schedule only computing resources on the current chip, the task cannot be effectively executed at once on the secondary chip when the secondary chip is currently busy. Therefore, how to implement efficient and flexible scheduling of tasks is an urgent technical problem that needs to be resolved.

### SUMMARY

This application provides a processing apparatus, a processing method, and a related device, to implement efficient and adaptive cross-chip task scheduling between chips, so as to resolve a problem of insufficient computing power of a single chip.

According to a first aspect, an embodiment of this application provides a processing apparatus, where the processing apparatus may include a scheduler, a mapper, and M first processing units. The mapper corresponds to N second processing units. The processing apparatus is integrated on a first chip, and the N second processing units are integrated on a second chip. M and N are integers greater than 0. The scheduler is configured to receive a target task, the target task carries a chip identifier, and the chip identifier identifies a chip for executing the target task. The mapper is configured to map computing resource status information of the N second processing units in the second chip to the first chip. The scheduler is further configured to: determine one or more target processing units from the M first processing units or the N second processing units based on the chip identifier, computing resource status information fed back by the M first processing units, and the computing resource status information of the N second processing units in the mapper; and send the target task to the one or more target processing units for execution.

In the solution provided in this application, a mapper is added to a chip (for example, a first chip) in different chips and is configured to map working status information of another chip (for example, a second chip), so that the first chip can properly schedule a computing resource on the second chip based on status information of a related computing resource on the second chip that is mapped through the mapper, thereby effectively improving a computing capability of the first chip. Specifically, a scheduler, a mapper, and one or more first processing units are disposed on the first chip. The scheduler receives a task, and the task carries a chip identifier, which indicates that there is no limitation on a chip for executing the target task. When scheduling the task based on the chip identifier, the scheduler may query computing resources of two chips (including the first chip and the second chip) on the first chip, thereby reducing time for determining a target processing unit, quickly scheduling the task to a processing unit that has an idle computing resource in the first chip or the second chip for execution. Based on the chip identifier, and because a chip for executing the target task is not limited, when determining the target processing unit, the scheduler may preferentially determine the target processing unit from the first chip, and when there is no processing unit with an idle computing resource in the first chip, determine the target processing unit from the second chip. Alternatively, when determining the target processing unit, the scheduler may preferentially determine the target processing unit from the second chip, and when there is no processing unit with an idle computing resource in the second chip, determine the target processing unit from the first chip. In this way, adaptive cross-chip task scheduling can be implemented. This is different from the current technology in which a scheduler of a chip can query only computing resource status information of a first processing unit in the current chip and schedule a task in the current chip, and consequently, a task fails to be executed in time due to insufficient computing power of the current chip. In this embodiment of this application, a mapper disposed on the first chip may be configured to perform an efficient and adaptive cross-chip task scheduling on one or more second processing units in the second chip, to resolve a problem of insufficient computing power of a single chip of the first chip.

That the mapper maps the computing resource status information of the N second processing units to the first chip may be understood as that the mapper may implement correspondence to the N second processing units, and map (store) the computing resource status information of the N second processing units. Optionally, the mapper may further determine a computing resource status of the N second processing units.

In a possible implementation, the scheduler is specifically configured to: when the chip identifier is a first chip identifier, determine the one or more target processing units from the M first processing units, and when there is no processing unit with an idle computing resource in the M first processing units, determine the one or more target processing units from the N second processing units, where the first chip identifier identifies that the target task is preferentially executed in the first chip.

In the solution provided in this application, the first chip identifier indicates that there is no limitation on a chip for executing the target task, but the first chip preferentially executes the target task. When a chip carried in the target task received by the scheduler is the first chip identifier, the one or more target processing units may be preferentially determined from the M first processing units, and if there is no processing unit with an idle computing resource in the M first processing units, the one or more target processing units are determined from the N second processing units. In this way, adaptive cross-chip task scheduling can be implemented.

In a possible implementation, the scheduler is specifically configured to: when the chip identifier is a second chip identifier, determine the one or more target processing units from the N second processing units, and when there is no processing unit with an idle computing resource in the N second processing units, determine the one or more target processing units from the M first processing units, where the second chip identifier identifies that the target task is preferentially executed in the second chip.

In the solution provided in this application, the second chip identifier indicates that there is no limitation on a chip for executing the target task, but the second chip preferentially executes the target task. When a chip carried in the target task received by the scheduler is the second chip identifier, the one or more target processing units may be preferentially determined from the N second processing units, and if there is no processing unit with an idle computing resource in the N second processing units, the one or more target processing units are determined from the M first processing units. In this way, adaptive cross-chip task scheduling can be implemented.

In a possible implementation, the mapper includes K mapping modules, where K is an integer greater than 0. The K mapping modules correspond to the N second processing units. When N = K, one mapping module corresponds to one second processing unit. When N > K, one mapping module corresponds to a plurality of second processing units. When N < K, a plurality of mapping modules correspond to one second processing unit.

In the solution provided in this application, the mapper may include one or more mapping modules. The mapper corresponds to one or more second processing units. A specific implementation may be that one mapping module corresponds to one second processing unit, or one mapping module corresponds to a plurality of second processing units, or a plurality of mapping modules correspond to one second processing unit, or a plurality of mapping modules correspond to a plurality of second processing units. Through a plurality of corresponding manners, the mapper may more flexibly implement correspondence with one or more second processing units.

In a possible implementation, when one mapping module corresponds to one second processing unit, one mapping module is configured to map computing resource status information of one second processing unit. Alternatively, when one mapping module corresponds to a plurality of second processing units, one mapping module is configured to map computing resource status information of a plurality of second processing units. Alternatively, when a plurality of mapping modules correspond to one second processing unit, a plurality of mapping modules are configured to map computing resource status information of one second processing unit.

In the solution provided in this application, when a mapping module corresponds to a second processing unit, it may specifically indicate that a mapping module stores computing resource status information of a second processing unit. The computing resource status information may be a busy/idle state of a processing unit in processing a task. The mapping module stores the computing resource status information of the one or more second processing units, and the scheduler may query the computing resource status information of the second processing unit in the first chip, so that the target task can be scheduled to the second processing unit with an idle computing resource more quickly, thereby implementing cross-chip scheduling.

In a possible implementation, when a plurality of mapping modules correspond to one second processing unit, the plurality of mapping modules are specifically configured to map computing resource status information of a plurality of processing subunits in one second processing unit, where one mapping module corresponds to one processing subunit.

In the solution provided in this application, when a plurality of mapping modules store computing resource status information of one second processing unit, the plurality of mapping modules may store computing resource status information of a processing subunit in the second processing unit. For example, when the second processing unit is a CPU, the plurality of mapping modules may store computing resource status information of a CPU core. In this way, the computing resource status information of the second processing unit that is stored by the mapping module is more detailed, and accuracy of querying the computing resource status information of the second processing unit by the scheduler can be improved.

In a possible implementation, when a plurality of mapping modules correspond to one second processing unit, the plurality of mapping modules are specifically configured to map computing resource status information of a plurality of queues in one second processing unit, where one mapping module corresponds to one queue.

In the solution provided in this application, when a plurality of mapping modules store computing resource status information of one second processing unit, the plurality of mapping modules may store computing resource status information of a thread/queue of a processing subunit in the second processing unit. For example, when the second processing unit is a CPU, and the processing subunit is a CPU core, the plurality of mapping modules may store computing resource status information of a plurality of threads/queues in the CUP core. In this way, the computing resource status information of the second processing unit that is stored by the mapping module is further detailed, and accuracy of querying the computing resource status information of the second processing unit by the scheduler can be improved.

In a possible implementation, the one or more target processing units are one or more processing units in the N second processing units, and the mapper is specifically configured to: receive the target task sent by the scheduler; send the target task to the one or more target processing units for execution; determine the computing resource status information of the N second processing units based on a quantity of tasks sent to the N second processing units and a quantity of tasks that have been completed by the N second processing units; and map the computing resource status information of the N second processing units.

In the solution provided in this application, the mapper maps the computing resource status information of the one or more second processing units. In a specific implementation, if the one or more target processing units are one or more processing units in the N second processing units, the scheduler may first send the target task to the mapper, and then the mapper forwards the target task to the one or more target processing units for execution. After executing the target task, the one or more target processing units may feed back an execution result of the target task to the mapper, and then the mapper forwards the execution result of the target task to the scheduler. In this way, the mapper may determine a computing resource status of each second processing unit based on a quantity of tasks sent to each second processing unit and a quantity of completed tasks fed back by each second processing unit, and then map computing resource status information of each second processing unit. In this way, the scheduler may query the mapper for the computing resource status information of the one or more second processing units, thereby implementing cross-chip scheduling.

In a possible implementation, the mapper is further configured to: store information about the target task sent to the one or more target processing units, where the information about the target task is used for maintenance or exception query of the target task.

In the solution provided in this application, when forwarding the target task to the one or more target processing units, and when forwarding the execution result of the target task to the scheduler, the mapper may store information about the target task. The information about the target task may include a task identifier and some or all information, and may further include the execution result of the target task. In this way, a query speed can be improved during maintenance or exception handling.

In a possible implementation, the mapper is specifically configured to: receive computing resource status information sent by each second processing unit in the N second processing units; and map the computing resource status information of the N second processing units.

In the solution provided in this application, the mapper maps the computing resource status information of the one or more second processing units. In another specific implementation, each second processing unit may directly report its own computing resource status information to the mapper. For example, the second processing unit may report the computing resource status information to the mapper through an interface. The reporting may be performed in real time to minimize a delay. In this way, the mapper may also obtain the computing resource status information of each second processing unit, so that the scheduler may query the mapper for the computing resource status information of one or more second processing units, thereby implementing cross-chip scheduling.

In a possible implementation, the target task further carries a task attribute, and the target processing unit is a first processing unit or a second processing unit that matches the task attribute and that has an idle computing resource.

In the solution provided in this application, in addition to carrying the chip identifier, the target task may further carry the task attribute. When scheduling the target task, the scheduler may determine the target processing unit from the M first processing units or the N second processing units based on the chip identifier and the task attribute. Based on the task attribute, the target task may be scheduled to an optimal processing unit (which matches the task attribute) that has an idle computing resource for execution, so that execution efficiency of the target task can be improved.

In a possible implementation, any one first processing unit in the M first processing units is any one of the following: a CPU processing unit CPU, an image processing accelerator, an image encoding/decoding accelerator, and an artificial intelligence AI computing unit. Alternatively, any one second processing unit in the N second processing units is any one of the following: a CPU, an image processing accelerator, an image encoding/decoding accelerator, and an AI computing unit.

According to a second aspect, an embodiment of this application provides a processing method, where the processing method may be applied to a processing apparatus, and the processing apparatus includes a scheduler, a mapper, and M first processing units. The mapper corresponds to N second processing units. The processing apparatus is integrated on a first chip, and the N second processing units are integrated on a second chip. M and N are integers greater than 0. The processing method includes: receiving a target task through the scheduler, where the target task carries a chip identifier, and the chip identifier identifies a chip for executing the target task; mapping computing resource status information of the N second processing units in the second chip to the first chip through the mapper; determining one or more target processing units from the M first processing units or the N second processing units through the scheduler based on the chip identifier, computing resource status information fed back by the M first processing units, and the computing resource status information of the N second processing units in the mapper; and sending the target task to the one or more target processing units for execution.

In a possible implementation, the determining one or more target processing units from the M first processing units or the N second processing units through the scheduler based on the chip identifier, computing resource status information fed back by the M first processing units, and the computing resource status information of the N second processing units in the mapper includes: when the chip identifier is a first chip identifier, determining the one or more target processing units from the M first processing units through the scheduler, and when there is no processing unit with an idle computing resource in the M first processing units, determining the one or more target processing units from the N second processing units, where the first chip identifier identifies that the target task is preferentially executed in the first chip.

In a possible implementation, the determining one or more target processing units from the M first processing units or the N second processing units through the scheduler based on the chip identifier, computing resource status information fed back by the M first processing units, and the computing resource status information of the N second processing units in the mapper includes: when the chip identifier is a second chip identifier, determining the one or more target processing units from the N second processing units through the scheduler, and when there is no processing unit with an idle computing resource in the N second processing units, determining the one or more target processing units from the M first processing units, where the second chip identifier identifies that the target task is preferentially executed in the second chip.

In a possible implementation, the mapper includes K mapping modules, where K is an integer greater than 0. The K mapping modules correspond to the N second processing units. When N = K, one mapping module corresponds to one second processing unit. When N > K, one mapping module corresponds to a plurality of second processing units. When N < K, a plurality of mapping modules correspond to one second processing unit.

In a possible implementation, computing resource status information of one second processing unit is mapped through one mapping module when one mapping module corresponds to one second processing unit. Alternatively, computing resource status information of a plurality of second processing units is mapped through one mapping module when one mapping module corresponds to a plurality of second processing units. Alternatively, computing resource status information of a processing subunit in one second processing unit is mapped through a plurality of mapping modules when a plurality of mapping modules correspond to one second processing unit.

In a possible implementation, that when a plurality of mapping modules correspond to one second processing unit, computing resource status information of one second processing unit is mapped through a plurality of mapping modules includes: mapping computing resource status information of a plurality of processing subunits in one second processing unit through the plurality of mapping modules, where one mapping module corresponds to one processing subunit.

In a possible implementation, that when a plurality of mapping modules correspond to one second processing unit, computing resource status information of one second processing unit is mapped through a plurality of mapping modules includes: mapping computing resource status information of a plurality of queues in one second processing unit through the plurality of mapping modules, where one mapping module corresponds to one queue.

In a possible implementation, the one or more target processing units are one or more processing units in the N second processing units, and the mapping computing resource status information of the N second processing units in the second chip to the first chip through the mapper includes: through the mapper: receiving the target task sent by the scheduler; sending the target task to the one or more target processing units for execution; determining a computing resource status of the N second processing units based on a quantity of tasks sent to the N second processing units and a quantity of tasks that have been completed by the N second processing units; and mapping the computing resource status information of the N second processing units.

In a possible implementation, the processing method further includes: storing, through the mapper, information about the target task sent to the one or more target processing units, where the information about the target task is used for maintenance or exception query of the target task.

In a possible implementation, the mapping computing resource status information of the N second processing units in the second chip to the first chip through the mapper includes: through the mapper: receiving computing resource status information sent by each second processing unit in the N second processing units; and mapping the computing resource status information of the N second processing units.

In a possible implementation, the target task further carries a task attribute, and the target processing unit is a first processing unit or a second processing unit that matches the task attribute and that has an idle computing resource.

In a possible implementation, any one first processing unit in the M first processing units is any one of the following: a CPU, an image processing accelerator, an image encoding/decoding accelerator, and an AI computing unit. Alternatively, any one second processing unit in the N second processing units is any one of the following: a CPU, an image processing accelerator, an image encoding/decoding accelerator, and an AI computing unit.

According to a third aspect, an embodiment of this application provides a chip system, where the chip system may include the processing apparatus provided in the first aspect and with reference to any implementation of the first aspect, and at least one second chip, where the at least one second chip includes N second processing units, and N is an integer greater than 0. The N second processing units are configured to: receive a target task sent by the scheduler; and execute the target task.

In a possible implementation, the N second processing units are further configured to: send an execution result of the target task to the mapper.

In a possible implementation, the N second processing units are further configured to: send computing resource status information to the mapper.

In a possible implementation, any one second processing unit in the N second processing units is any one of the following: a CPU, an image processing accelerator, an image encoding/decoding accelerator, and an AI computing unit.

According to a fourth aspect, an embodiment of this application provides a processing method for a chip system, where the processing method may be applied to a chip system, and the chip system may include: the processing apparatus provided in the first aspect and with reference to any implementation of the first aspect, and at least one second chip, where the at least one second chip includes N second processing units, and N is an integer greater than 0. The processing method may include: the processing method provided in the second aspect and with reference to any implementation of the second aspect, and through the N second processing units: receiving a target task sent by the scheduler; and executing the target task.

In a possible implementation, the processing method further includes: sending an execution result of the target task to the mapper through the N second processing units.

In a possible implementation, the processing method further includes: sending computing resource status information to the mapper through the N second processing units.

In a possible implementation, any one second processing unit in the N second processing units is any one of the following: a CPU, an image processing accelerator, an image encoding/decoding accelerator, and an AI computing unit.

According to a fifth aspect, an embodiment of this application provides a computer-readable storage medium. The computer-readable storage medium stores a computer program. When the computer program is executed by a scheduler and a mapper in a processing apparatus, a procedure performed by the processing apparatus in the processing method provided in the first aspect and with reference to any implementation of the first aspect may be implemented.

According to a sixth aspect, an embodiment of this application provides a computer-readable storage medium, where the computer-readable storage medium stores a computer program. When the computer program is executed by a chip system, a procedure performed by the chip system in the processing method provided in the third aspect and with reference to any implementation of the third aspect may be implemented.

According to a seventh aspect, an embodiment of this application provides a computer program, where the computer program includes instructions. When the computer program is executed by a scheduler and a mapper in a processing apparatus, the processing apparatus is enabled to perform the processing method provided in the first aspect and with reference to any implementation of the first aspect.

According to an eighth aspect, an embodiment of this application provides a computer program, where the computer program includes instructions. When the computer program is executed by a scheduler and a mapper in a processing apparatus, the processing apparatus is enabled to perform the processing method provided in the third aspect and with reference to any implementation of the third aspect.

### BRIEF DESCRIPTION OF DRAWINGS

FIG. 1 is a schematic diagram of a structure of a chip in the current technology;
FIG. 2 is a schematic diagram of a structure of a processing apparatus according to an embodiment of this application;
FIG. 3 is a schematic diagram of a structure of another processing apparatus according to an embodiment of this application;
FIG. 4 is a schematic diagram of a corresponding manner according to an embodiment of this application;
FIG. 5 is a schematic diagram of another corresponding manner according to an embodiment of this application;
FIG. 6 is a schematic diagram of still another corresponding manner according to an embodiment of this application;
FIG. 7 is a schematic diagram of still another corresponding manner according to an embodiment of this application;
FIG. 8 is a schematic diagram of still another corresponding manner according to an embodiment of this application;
FIG. 9 is a schematic diagram of still another corresponding manner according to an embodiment of this application;
FIG. 10 is a schematic diagram of still another corresponding manner according to an embodiment of this application;
FIG. 11 is a schematic interaction diagram of a chip according to an embodiment of this application;
FIG. 12 is a schematic flowchart of a processing method according to an embodiment of this application;
FIG. 13 is a schematic diagram of a structure of a chip system according to an embodiment of this application; and
FIG. 14 is a schematic flowchart of another processing method according to an embodiment of this application.

### DESCRIPTION OF EMBODIMENTS

The following describes embodiments of this application with reference to accompanying drawings in the embodiments of this application. In this specification, the claims, and the accompanying drawings of this application, the terms "first", "second", "third", "fourth", and the like are intended to distinguish between different objects but do not describe a particular order. In addition, terms "include", "comprise", and any other variant thereof are intended to cover non-exclusive inclusion. For example, a process, a method, a system, a product, or a device that includes a series of steps or units is not limited to the listed steps or units, but optionally further includes other unlisted steps or units, or optionally further includes other steps or units inherent to the process, the method, the product, or the device. "Embodiment" mentioned in this specification means that a particular characteristic, structure or property described with reference to the embodiment may be included in at least one embodiment of this application. The phrase appearing at various locations in this specification does not necessarily refer to a same embodiment, and is not an independent or alternative embodiment mutually exclusive to another embodiment. A person skilled in the art explicitly and implicitly understands that an embodiment described in this specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate through a local and/or remote process and based on, for example, a signal having one or more data packets (for example, data from two components interacting with another component in a local system, a distributed system, and/or across a network such as the internet interacting with another system through a signal).

First, to facilitate understanding of embodiments of this application, a technical problem to be specifically resolved in this application is further analyzed and proposed. Currently, a technical solution for task scheduling of a chip is described in the following example.

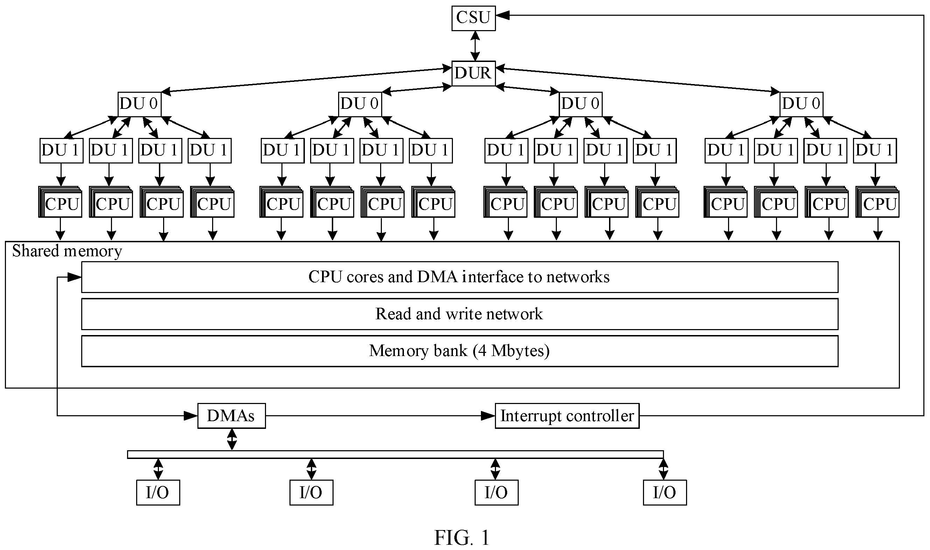

FIG. 1 is a schematic diagram of a structure of a chip in the current technology. As shown in FIG. 1, the chip includes a central scheduling unit (central scheduling unit, CSU), a distribution unit root (distribution unit root, DUR), a distribution unit (distribution unit, DU) 1, a DU 0, and a central processing unit (Central Processing Unit, CPU), a shared memory (shared memory), a direct memory access (direct memory access, DMA), an interrupt controller (interrupt controller), and an input/output interface (input/output, I/O). The shared memory includes CPU cores and DMA interface to networks (cores and DMA interface to networks), a read and write network (read and write network), and a memory bank with a size of 4 Mbytes (memory banks 4 Mbyte). The DUR may correspond to a plurality of DUs 0, the DU 0 may correspond to a plurality of DUs 1, and the DU 1 may correspond to a plurality of CPUs. All CPUs in the chip may perform operations such as data reading and writing through the shared memory.

The CSU is configured for task scheduling. Specifically, the CPU may report to an upper-level DU whether the CPU can receive a task, or may report a completion result to the upper-level DU when the task is completed. The DU summarizes statuses of all corresponding CPUs, and reports the statuses to an upper-layer DU until the DUR is reported to. The DUR reports the summary to the CSU, so that the CSU uses the summary as a condition for task scheduling to schedule tasks. The CSU maintains some look-up tables (look-up tables, LUTs) and queries the LUT based on the condition for task scheduling, to determine whether a current task can be delivered and executed. If the condition is satisfied, the CSU schedules the task to an idle CPU. After scheduling the task, the CSU may send the task to the DUR. The DUR may further distribute the task to a next-level DU 0, the DU 0 further distributes the task to a next-level DU 1, and the DU 1 distributes the task to a corresponding CPU.

Technical disadvantages of the solution mainly include the following aspects.
1. A chip can only invoke a computing resource within the current chip, and cannot invoke a computing resource outside the current chip. If computing resources of a processing apparatus of the current chip are insufficient, task execution is affected.
2. Busy/idle states of computing resources in a chip need to be reported to a CSU by level, and there is a delay. As a result, the busy/idle states of the computing resources are not reflected in time.
3. When a task is delivered to a processor, an attribute of the task is not considered, and all processors are considered as the same, so that the task cannot be scheduled to an optimal processor.

Therefore, technical problems to be resolved in embodiments of this application may include the following.
1. When computing resources of a chip are insufficient, a processing apparatus may invoke a computing resource of another chip to execute a task, so as to resolve a problem of insufficient computing power of a single chip. 2. A chip is mapped with computing resources of another chip, so that busy/idle states of the computing resources of the another chip can be queried in the current chip, thereby reducing a delay of querying the busy/idle states of the computing resources. 3. When a task is delivered to a scheduler, a task attribute is carried. The scheduler may schedule the task to an optimal processor based on the task attribute, thereby improving task processing efficiency.

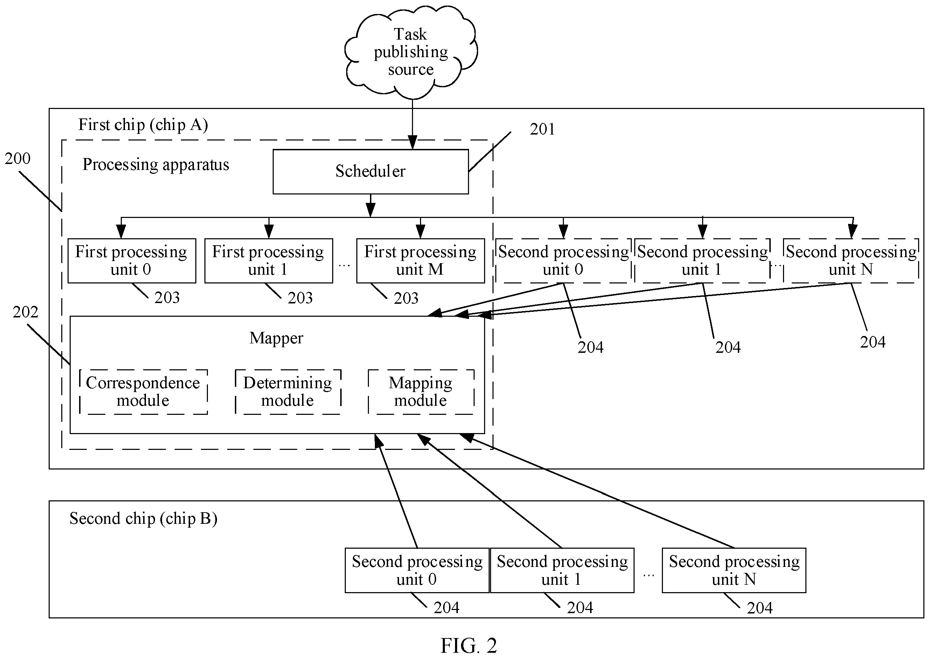

Based on the foregoing description, a processing apparatus provided in embodiments of this application is described below. FIG. 2 is a schematic diagram of a structure of a processing apparatus according to an embodiment of this application. As shown in FIG. 2, the processing apparatus 200 may include a scheduler 201, a mapper 202, and M first processing units 203. The processing apparatus 200 may be integrated on a first chip, the mapper 202 may correspond to N second processing units 204, the N second processing units 204 are integrated on a second chip, and M and N are integers greater than 0. A target task is published by a task publishing source to the scheduler 201, and the target task carries a chip identifier indicating that there is no limitation on a chip for executing the target task. When scheduling the task based on the chip identifier, the scheduler 201 may query the first chip for computing resource status information of the M first processing units 203 and the N second processing units 204, where the computing resource status information of the N second processing units 204 is mapped from the second chip through the mapper 202. The scheduler 201 may determine a target processing unit from the M first processing units 203 or the N second processing units 204 based on the computing resource status information of the M first processing units 203 and the N second processing units 204, and send the target task to the target processing unit for execution. Based on the chip identifier, because a chip for executing the target task is not limited, when determining one or more target processing units, the scheduler 201 may preferentially determine the one or more target processing units from the M first processing units 203, and when there is no processing unit with an idle computing resource in the M first processing units 203, determine the one or more target processing units from the N second processing units 204. Alternatively, when determining one or more target processing units, the scheduler may preferentially determine the one or more target processing units from the N second processing units 204, and when there is no processing unit with an idle computing resource in the N second processing units 204, determine the one or more target processing units from the M first processing units 203. In this way, adaptive cross-chip task scheduling can be implemented. As a result, this is different from the current technology in which the scheduler can query only computing resource status information of the first processing unit in the first chip, and schedule a task in the first chip, and consequently, a task fails to be executed in time due to insufficient computing power of the first chip. In this embodiment of this application, adaptive cross-chip task scheduling may be implemented by using one or more second processing units in the second chip, to resolve a problem of insufficient computing power of a single chip of the first chip.

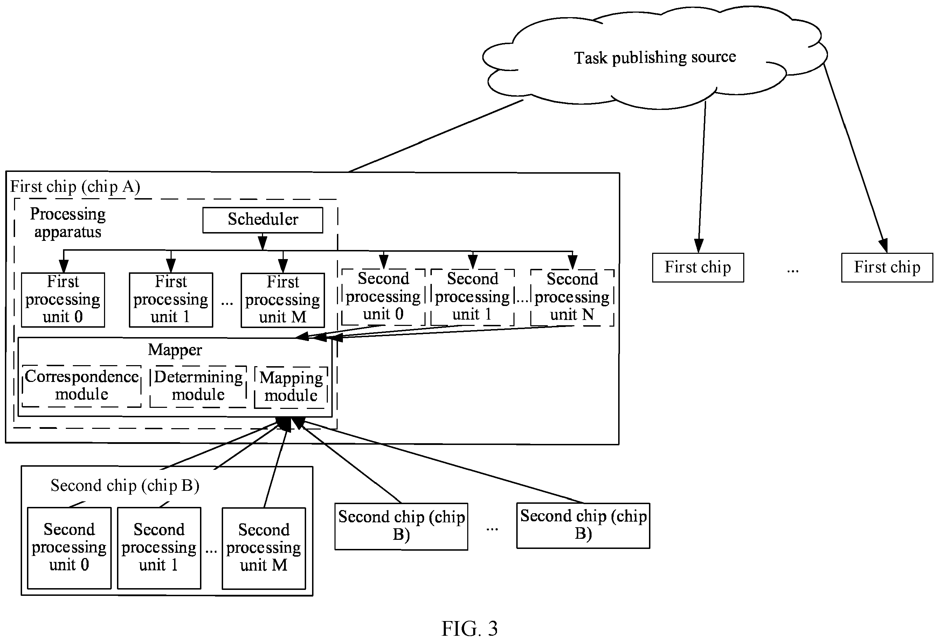

FIG. 3 is a schematic diagram of a structure of another processing apparatus according to an embodiment of this application. As shown in FIG. 3, a task publishing source may simultaneously deliver a task to schedulers in processing apparatuses of one or more first chips (three schedulers are used as an example in FIG. 3).

Optionally, this embodiment of this application is applicable to cross-chip task scheduling between chips, applicable to cross-CPU task scheduling between CPUs, and is also applicable to cross-die task scheduling between dies (dies), and the like.

The processing apparatus shown in FIG. 2 is described in detail below.

The scheduler 201 is configured to receive a target task, where the target task carries a chip identifier, and may further carry a task attribute. The chip identifier identifies a chip for executing the target task. It may be understood as that the chip identifier may indicate that the target task is insensitive to cross-chip execution, that is, a chip for executing the target task is not limited. If the chip identifier identifies a first chip and a second chip, it may indicate that the target task may be executed on the first chip, or may be executed on the second chip. The task attribute may be an attribute such as a type of a task, a calculation frequency required by a task, or space required by a task. For example, the task is which type of task, or the task has which calculation frequency, or the task requires large space. The task attribute may alternatively be an attribute of a task with a special calculation type.

If the target task is insensitive to cross-chip execution, the chip identifier may include a first chip identifier and a second chip identifier. The first chip identifier indicates that there is no limitation on a chip for executing the target task, but the first chip preferentially executes the target task. The second chip identifier indicates that there is no limitation on a chip for executing the target task, but the second chip preferentially executes the target task.

For example, the chip identifier may be "0", indicating that there is no limitation on a chip for executing the target task. The first chip identifier may be "01", indicating that there is no limitation on a chip for executing the target task, but the first chip preferentially executes the target task. The second chip identifier may be "02", indicating that there is no limitation on a chip for executing the target task, but the second chip preferentially executes the target task. For another example, the chip identifier may be "012", indicating that chip 0, chip 1, and chip 2 can execute the target task. The first chip identifier may be "0120", indicating that chip 0, chip 1, and chip 2 can execute the target task, but chip 0 preferentially executes the target task. The second chip identifier may be "0121", indicating that chip 0, chip 1, and chip 2 can execute the target task, but chip 1 preferentially executes the target task.

For another example, the chip identifier may be "1", indicating that the target task is completed as quickly as possible, and the scheduler 201 determines that the target task can be scheduled only in the first chip. The chip identifier may alternatively be "2", indicating that the target task occupies as many computing resources as possible. The scheduler 201 determines that the target task may be preferentially executed in the second chip.

The target task may be delivered by a task publishing source to the scheduler 201. When delivering the target task, the task publishing source may not distinguish whether the target task should be sent to the first chip or the second chip. Instead, the task publishing source first delivers the target task to the scheduler 201 uniformly, and then the scheduler 201 performs scheduling. The task publishing source may be a compiler independent of the first chip and the second chip. The compiler is configured to compile a task, and deliver the compiled task to the scheduler 201. Alternatively, the task publishing source may be some components that are in the first chip or the second chip and that are configured to deliver a task to the scheduler 201. This is not limited in this application.

When receiving the target task delivered by the task publishing source, the scheduler 201 may determine one or more target processing units from the M first processing units 203 or the N second processing units 204 based on the chip identifier, computing resource status information fed back by the M first processing units 203, and the computing resource status information of the N second processing units 204 in the mapper 202. Specific implementations may be as follows.

In an implementation, if the target task carries a chip identifier, the scheduler 201 may determine, based on the chip identifier, that there is no limitation on a chip for executing the target task, first query computing resource status information of the M first processing units 203 and the N second processing units 204, and determine a processing unit with an idle computing resource from the M first processing units 203 or the N second processing units 204. Alternatively, the scheduler 201 may first determine a processing unit with an idle computing resource from the M first processing units 203 and the N second processing units 204, and then determine, based on the chip identifier, one or more target processing units from the processing unit with the idle computing resource. If the processing unit with the idle computing resource only exists in the first processing unit, the one or more target processing units may be determined from the first processing unit. If the processing unit with the idle computing resource only exists in the second processing unit, the one or more target processing units may be determined from the second processing unit. If processing units with idle computing resources exist in the first processing unit and the second processing unit, the one or more target processing units may be determined based on sequence numbers corresponding to the processing units with the idle computing resources. For example, a processing unit with a large sequence number in the processing units with the idle computing resources is selected as the target processing unit, or a processing unit with a small sequence number in the processing units with the idle computing resources is selected as the target processing unit. Similarly, when determining the one or more target processing units from the first processing unit or determining the one or more target processing units from the second processing unit, if a quantity of processing units with idle computing resources in the first processing unit or the second processing unit is greater than a quantity of target processing units, the target processing unit may alternatively be determined based on sequence numbers corresponding to the processing units with the idle computing resources. A sequence number corresponding to each processing unit in the M first processing units 203 and the N second processing units 204 may be preset, and each processing unit corresponds to a different sequence number. The computing resource status information may be a busy/idle state of a processing unit in processing a task, and may include information such as a quantity of tasks that can be received by a processing unit and a working status of a processing unit.

In another implementation, if the target task carries the first chip identifier, the scheduler 201 may determine, based on the first chip identifier, that there is no limitation on a chip for executing the target task, but the first chip preferentially executes the target task. The scheduler 201 may first query the computing resource status information of the M first processing units 203, and determine one or more target processing units from the M first processing units 203. If there is no processing unit with an idle computing resource in the M first processing units 203, the scheduler 201 queries the computing resource status information of the N second processing units 204, and determines the one or more target processing units from the N second processing units 204. Same as the foregoing implementation, when determining the target processing unit from the first processing unit or determining the one or more target processing units from the second processing unit, if a quantity of processing units with idle computing resources in the first processing unit or the second processing unit is greater than a quantity of target processing units, the target processing unit may be determined based on sequence numbers corresponding to the processing units with the idle computing resources.

In still another implementation, if the target task carries the second chip identifier, the scheduler 201 may determine, based on the second chip identifier, that there is no limitation on a chip for executing the target task, but the second chip preferentially executes the target task. The scheduler 201 may first query the computing resource status information of the N second processing units 204, and determine one or more target processing units from the N second processing units 204. If there is no processing unit with an idle computing resource in the N second processing units 204, the scheduler 201 queries the computing resource status information of the M first processing units 203, and determines the one or more target processing units from the M first processing units 203. Same as the foregoing implementation, when determining the target processing unit from the first processing unit or determining the one or more target processing units from the second processing unit, if a quantity of processing units with idle computing resources in the first processing unit or the second processing unit is greater than a quantity of target processing units, the target processing unit may be determined based on sequence numbers corresponding to the processing units with the idle computing resources.

Optionally, when the target task further carries a task attribute, the target processing unit is a first processing unit or a second processing unit that matches the task attribute and that has an idle computing resource. The scheduler 201 may schedule, based on the task attribute, the target task to an optimal target processing unit for execution, that is, schedule the target task to a processing unit that matches the task attribute and that has an idle computing resource for execution, so that execution efficiency of the target task can be improved. Specifically, if the task attribute refers to a type of a task, some tasks of a special type can only be executed on a particular type of processing unit. Some tasks are control type tasks (for controlling starting and ending of a task), and some tasks are tasks for handling exceptions. For example, a chip has ten CPUs, in which nine CPUs are configured to perform computing, and one CPU (CPU 1) is configured to control other nine CPUs (send a control command to the other nine CPUs, and control the other nine CPUs to start and end task execution). In this case, a task attribute of the task of sending a control command may be a control type, and CPU 1 is a CPU configured to execute a control type task. Therefore, the scheduler may schedule the task of sending the control command to CPU 1 for execution.

After determining the one or more target processing units, the scheduler 201 may send the target task to the one or more target processing units for execution.

The mapper 202 is configured to map computing resource status information of the N second processing units in the second chip to the first chip. It may be understood that the mapper 202 may implement correspondence between itself and the N second processing units 204, and map (store) the computing resource status information of the N second processing units 204. Optionally, the mapper 202 may further determine a computing resource status of the N second processing units.

The mapper 202 implements correspondence between itself and the N second processing units 204, and a specific implementation may be as follows.

The mapper 202 may include K mapping modules, where K is an integer greater than 0, and the K mapping modules correspond to the N second processing units 204. The K mapping modules correspond to the N second processing units 204, which may be one-to-one correspondence, one-to-many correspondence, many-to-one correspondence, or many-to-many correspondence. In the K mapping modules, some mapping modules may correspond to the second processing unit in a one-to-one manner, some mapping modules may correspond to the second processing unit in a one-to-many manner, some mapping modules may correspond to the second processing unit in a many-to-one manner, and some mapping modules may correspond to the second processing unit in a many-to-many manner. A corresponding manner is not limited in this application.

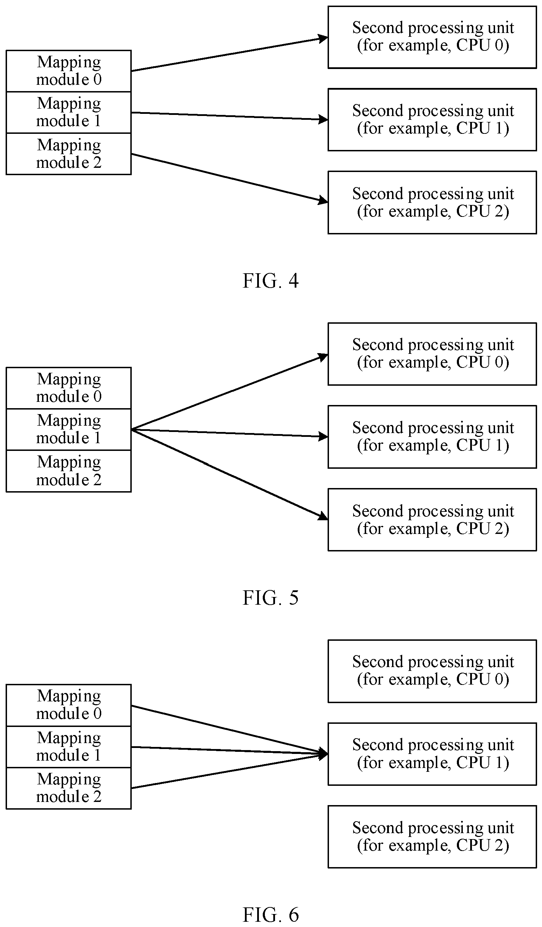

In an implementation, when N = K, one mapping module may correspond to one second processing unit. In an embodiment, FIG. 4 is a schematic diagram of a corresponding manner according to the embodiment of this application. As shown in FIG. 4, K = 3, and N = 3. That is, three mapping modules and three second processing units may be included, and the second processing unit may be a CPU. Mapping module 0 corresponds to CPU 0, mapping module 1 corresponds to CPU 1, and mapping module 2 corresponds to CPU 2.

In another implementation, when N > K, one mapping module may correspond to a plurality of second processing units. In an embodiment, FIG. 5 is a schematic diagram of another corresponding manner according to the embodiment of this application. As shown in FIG. 5, K = 1, and N = 3. That is, one mapping module and three second processing units may be included, and the second processing unit may be a CPU. Mapping module 1 corresponds to CPU 0, CPU 1, and CPU 2.

In still another implementation, when N < K, a plurality of mapping modules may correspond to one second processing unit. In an embodiment, FIG. 6 is a schematic diagram of still another corresponding manner according to the embodiment of this application. As shown in FIG. 6, K = 3, and N = 1. That is, three mapping modules and one second processing unit may be included, and the second processing unit may be a CPU. Mapping module 0, mapping module 1, and mapping module 2 correspond to CPU 1.

Specifically, there may be two cases in which a plurality of mapping modules correspond to one second processing unit.

Case 1: A plurality of mapping modules may specifically correspond to a plurality of processing subunits in one second processing unit. One mapping module corresponds to one processing subunit. For example, if the second processing unit is a CPU, and the plurality of processing subunits are a plurality of CPU cores in the CPU, a plurality of mapping modules correspond to a plurality of CPU cores.

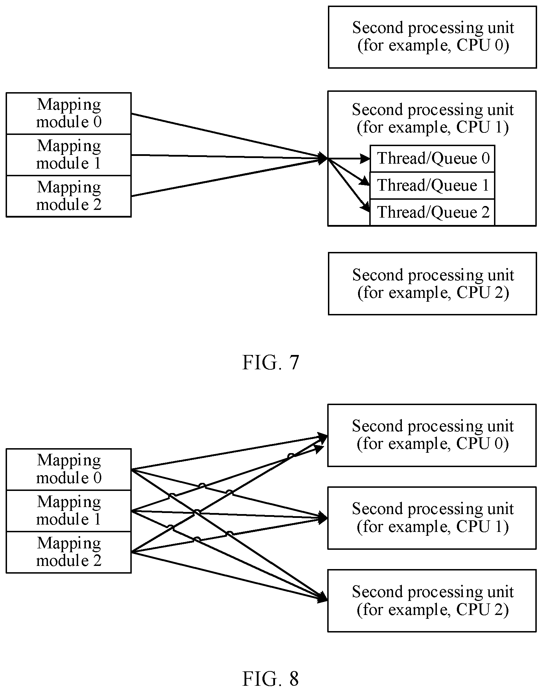

Case 2: A plurality of mapping modules may specifically correspond to a plurality of queues in one second processing unit. One mapping module corresponds to one queue. The plurality of queues may be a plurality of queues (for example, queues other than a CPU core) in one second processing unit, or may be a plurality of queues (for example, queues on a CPU core) in a processing subunit of the second processing unit. When a plurality of mapping modules correspond to a plurality of queues, reference may be made to a correspondence manner in which the K mapping modules correspond to the N second processing units 204. For example, if the second processing unit is a CPU, the plurality of processing subunits are a plurality of CPU cores in the CPU, and the plurality of queues are a plurality of threads or queues of a CPU core. In an embodiment, FIG. 7 is a schematic diagram of still another corresponding manner according to the embodiment of this application. As shown in FIG. 7, K = 3, and N = 1. That is, three mapping modules and one second processing unit may be included. The second processing unit may be a CPU, and CPU 1 includes three threads/queues. Mapping module 0 corresponds to thread/queue 0, mapping module 1 corresponds to thread/queue 1, and mapping module 2 corresponds to thread/queue 2.

In still another implementation, when N = K, N > K, or N < K, a plurality of mapping modules may correspond to a plurality of second processing units. In an embodiment, FIG. 8 is a schematic diagram of still another corresponding manner according to the embodiment of this application. As shown in FIG. 8, K = 3, and N = 3. That is, three mapping modules and three second processing units may be included, and the second processing unit may be a CPU. Mapping module 0 corresponds to CPU 0, CPU 1, and CPU 2, mapping module 1 corresponds to CPU 0, CPU 1, and CPU 2, and mapping module 2 corresponds to CPU 0, CPU 1, and CPU 2.

Specifically, there may be two cases in which a plurality of mapping modules correspond to a plurality second processing unit.

Case 1: A plurality of mapping modules may specifically correspond to a plurality of processing subunits in a plurality second processing unit. For example, if the second processing unit is a CPU, and the plurality of processing subunits are a plurality of CPU cores in the CPU, a plurality of mapping modules correspond to a plurality of CPU cores. It may be understood that a plurality of mapping modules may correspond to a plurality of processing subunits in one second processing unit, or may correspond to one or more processing subunits in a plurality of second processing units.

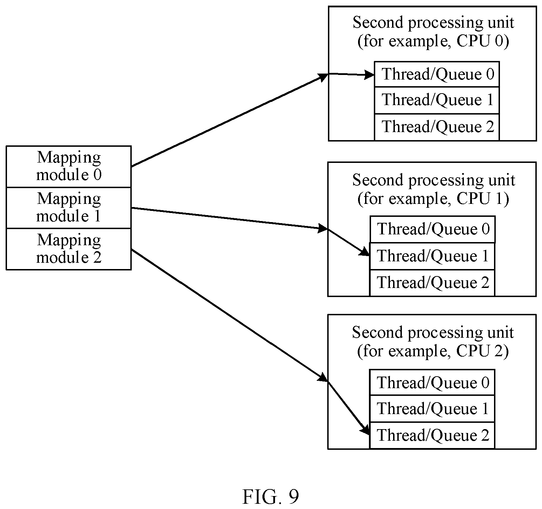

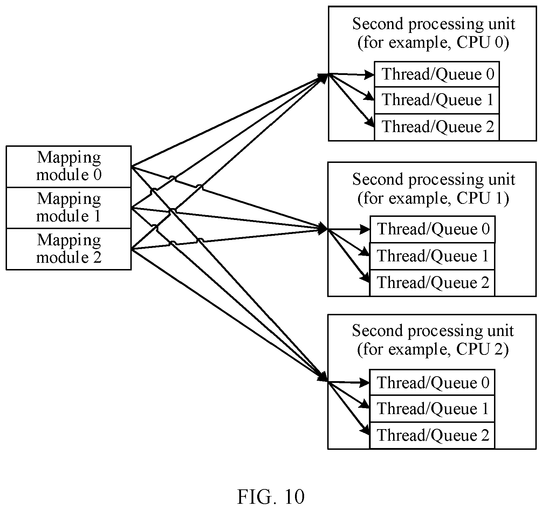

Case 2: A plurality of mapping modules may specifically correspond to a plurality of queues in one second processing unit. In an embodiment, FIG. 9 is a schematic diagram of still another corresponding manner according to the embodiment of this application. As shown in FIG. 9, K = 3, and N = 3. That is, three mapping modules and three second processing units may be included, and the second processing unit may be a CPU. Each CPU includes three threads/queues (or three CPU cores, and three threads/queues are used as an example herein). Mapping module 0 corresponds to thread/queue 0 in CPU 0, mapping module 1 corresponds to thread/queue 1 in CPU 1, and mapping module 2 corresponds to thread/queue 2 in CPU 2. It may be understood that mapping module 0 may alternatively correspond to another thread/queue in CPU 0, mapping module 1 may alternatively correspond to another thread/queue in CPU 1, and mapping module 2 may alternatively correspond to another thread/queue in CPU 2. In another embodiment, FIG. 10 is a schematic diagram of still another corresponding manner according to the embodiment of this application. As shown in FIG. 10, K = 3, and N = 3. That is, three mapping modules and three second processing units may be included, and the second processing unit may be a CPU. Each CPU includes three threads/queues. Mapping module 0 may correspond to thread/queue 0, thread/queue 1, and thread/queue 2 in CPU 0, CPU 1, and CPU 2. Mapping module 1 may correspond to thread/queue 0, thread/queue 1, and thread/queue 2 in CPU 0, CPU 1, and CPU 2. Mapping module 2 may correspond to thread/queue 0, thread/queue 1, and thread/queue 2 in CPU 0, CPU 1, and CPU 2. Alternatively, mapping module 0 may correspond to thread/queue 0 in CPU 0, thread/queue 0 in CPU 1, and thread/queue 0 in CPU 2. Mapping module 1 may correspond to thread/queue 1 in CPU 0, thread/queue 1 in CPU 1, and thread/queue 1 in CPU 2. Mapping module 2 may correspond to thread/queue 2 in CPU 0, thread/queue 2 in CPU 1, and thread/queue 2 in CPU 2. In this embodiment, there may be another corresponding manner, which is not limited.

It may be understood that the foregoing are some example implementations, and corresponding manners in this embodiment of this application include but are not limited to the foregoing corresponding manners. Through a plurality of corresponding manners, the mapper may more flexibly implement correspondence with one or more second processing units.

The mapper 202 maps the computing resource status information of the N second processing units 204. Specifically, when one mapping module corresponds to one second processing unit, one mapping module is configured to map computing resource status information of one second processing unit. Alternatively, when one mapping module corresponds to a plurality of second processing units, one mapping module is configured to map computing resource status information of a plurality of second processing units. Alternatively, when a plurality of mapping modules correspond to one second processing unit, a plurality of mapping modules are configured to map computing resource status information of one second processing unit. Alternatively, when a plurality of mapping modules correspond to a plurality of second processing units, a plurality of mapping modules are configured to map computing resource status information of a plurality of second processing units. In this way, computing resource status information of a second processing unit mapped through a mapping module is further refined. This can improve accuracy of querying the computing resource status information of the N second processing units 204 by the scheduler 201.

The mapper 202 maps the computing resource status information of the N second processing units 204. Specific implementations may be as follows.

In a possible implementation, if the one or more target processing units are one or more processing units in the N second processing units, the scheduler 201 may first send the target task to the mapper 202, and the mapper 202 receives the target task sent by the scheduler 201, and then forwards the target task to the target processing unit for execution. After executing the target task, the target processing unit may feed back an execution result of the target task to the mapper 202, and then the mapper 202 forwards the execution result of the target task to the scheduler 201. In this way, the mapper 202 may determine a computing resource status of each second processing unit in the N second processing units 204 based on a quantity of tasks sent to each second processing unit in the N second processing units 204 and a quantity of tasks that have been completed by each second processing unit in the N second processing units 204, and then map computing resource status information of the N second processing units 204. For example, if a quantity of tasks that are not completed by a second processing unit in the N second processing units 204 exceeds a set threshold, the mapper 202 may determine that the second processing unit is in a busy state, and report the busy state to the scheduler 201, and the scheduler 201 no longer delivers a task to the second processing unit.

Optionally, the mapper 202 may further store information about the target task sent to the target processing unit in the N second processing units 204, where the information about the target task is used for maintenance or exception query of the target task. The information about the target task may include a task identifier and some or all information, and may further include an execution result of the target task. In this way, a query speed can be improved during maintenance or exception handling.

In another possible implementation, the mapper 202 may include a correspondence module, a mapping module, and a determining module. If the one or more target processing units are one or more processing units in the N second processing units, the scheduler 201 may first send the target task to the mapper 202, and the mapper 202 receives the target task sent by the scheduler 201, and then forwards the target task to the one or more target processing units for execution. After executing the target task, the one or more target processing units may feed back an execution result of the target task to the mapper 202, and then the mapper 202 forwards the execution result of the target task to the scheduler 201. The correspondence module may be configured to correspond the N second processing units 204 to the mapper 202. The mapping module may be configured to map the computing resource status information of the N second processing units 204. The determining module may be configured to determine a computing resource status of each second processing unit in the N second processing units 204 based on a quantity of tasks sent to each second processing unit in the N second processing units 204 and a quantity of tasks that have been completed by each second processing unit in the N second processing units 204. For example, if a quantity of tasks that are not completed by a second processing unit in the N second processing units 204 exceeds a set threshold, the determining module may determine that the second processing unit is in a busy state, and report the busy state to the scheduler 201, so that the scheduler 201 no longer delivers a task to the second processing unit.

Optionally, the mapping module may be further configured to store information about the target task sent to the one or more target processing units in the N second processing units 204, where the information about the target task is used for maintenance or exception query of the target task. The information about the target task may include a task identifier and some or all information, and may further include an execution result of the target task. In this way, a query speed can be improved during maintenance or exception handling. Optionally, if the mapping module is configured to map only the computing resource status information of the N second processing units 204, storing task information about the target task may be completed by another module in the scheduler 202.

In still another possible implementation, each second processing unit in the N second processing units 204 may send its own computing resource status information to the mapper 202. After receiving the computing resource status information sent by each second processing unit in the N second processing units 204, the mapper 202 maps the computing resource status information of the N second processing units 204. For example, the N second processing units 204 may report the computing resource status information to the mapper 202 through an interface. That is, the first chip may be provided with an interface, and the computing resource status information of the N second processing units 204 may be reported to the mapper 202 through the interface. The N second processing units 204 may report the computing resource status information to the mapper 202 in real time, to reduce a delay as much as possible. The interface may be hardware, or may implement transmission of the computing resource status information of the N second processing units 204 by software.

Optionally, when the scheduler 201 sends the target task to one or more target processing units in the N second processing units 204, the target task may be further forwarded through the mapper 202. In this way, the mapper 202 may further store information about the target task sent to the target processing unit in the N second processing units 204. In this way, a query speed can be improved during maintenance or exception handling.

In still another possible implementation, the mapper 202 may include a correspondence module and a mapping module. The correspondence module may be configured to correspond the N second processing units 204 to the mapper 202. Each second processing unit in the N second processing units 204 may send its own computing resource status information to the mapping module. After receiving the computing resource status information sent by each second processing unit in the N second processing units 204, the mapping module maps the computing resource status information of the N second processing units 204. For example, the N second processing units 204 may report the computing resource status information to the mapping module through an interface. That is, the first chip may be provided with an interface, and the computing resource status information of the N second processing units 204 may be reported to the mapping module through the interface. The N second processing units 204 may report the computing resource status information to the mapping module in real time, to reduce a delay as much as possible. The interface may be hardware, or may implement transmission of the computing resource status information of the N second processing units 204 by software.

Optionally, when the scheduler 201 sends the target task to one or more target processing units in the N second processing units 204, the target task may be further forwarded through the mapper 202. In this way, the mapping module may further store information about the target task sent to one or more target processing units in the N second processing units 204. In this way, a query speed can be improved during maintenance or exception handling. Optionally, if the mapping module is configured to map only the computing resource status information of the N second processing units 204, storing task information about the target task may be completed by another module in the scheduler 202.

It may be understood that in the descriptions of the foregoing implementations, any one first processing unit in the M first processing units 203 may be any one of the following: a CPU, an image processing accelerator, an image encoding/decoding accelerator, and an AI computing unit. Similarly, any one second processing unit in the N second processing units 204 may also be any one of the following: a CPU, an image processing accelerator, an image encoding/decoding accelerator, and an AI computing unit.

In a specific example, a scenario in which an Ascend AI chip 1981 and a Kunpeng processor chip 1630 network may be used as an example. Generally, the networking of the 1981 and 1630 chips is classified into two types: four 1630 chips + 16 1981 chips, and eight 1630 chips + eight 1981 chips. As an example, one 1981 chip may be selected in networking. A general scheduler (STARS) is integrated on the 1981. The scheduler may include another scheduler, such as an event scheduler (TOPIC SCH). A scheduling logic module named ACC_SLOT exists in the event scheduler. The scheduling logic module may have a maximum of 64 slots (SLOT), and each slot is bound to a CPU reserved in the 1630.

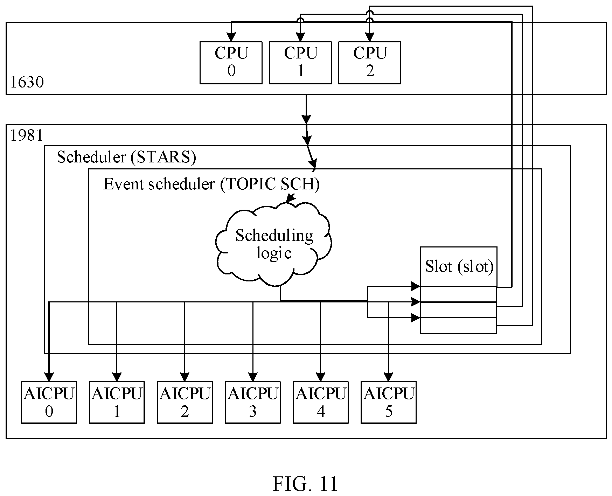

FIG. 11 is a schematic interaction diagram of a chip according to an embodiment of this application. As shown in FIG. 11, a chip 1981 and a chip 1630 are included. A scheduler (STARS), an event scheduler (TOPIC SCH), a scheduling logic module, a slot (slot), and AICPU 0 to AICPU 5 are integrated on the chip 1981, and CPU 0 to CPU 2 are integrated on the chip 1630.

With reference to the foregoing processing apparatus, the first chip may be the chip 1981, the second chip may be the chip 1630, M = 6, and N = 3. That is, six first processing units (AICPU 0 to AICPU 5) are integrated on the first chip, and three second processing units (CPU 0 to CPU 2) are integrated on the second chip. The processing apparatus is integrated on the first chip, and includes the scheduler (the event scheduler (TOPIC SCH)), a mapper (the scheduling logic module), and six first processing units. The mapper includes a mapping module (the slot (SLOT)). For specific implementations of implementing adaptive cross-chip task scheduling by the processing apparatus, refer to the implementations of the processing apparatus in FIG. 2 to FIG. 9. To avoid repetition, details are not described herein again.

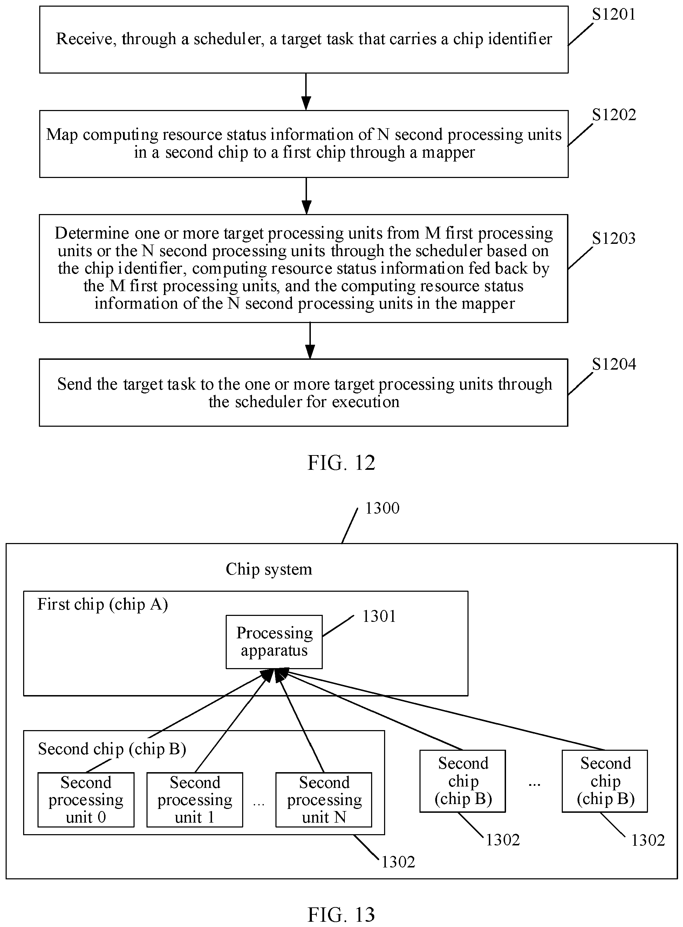

FIG. 12 is a schematic flowchart of a processing method according to an embodiment of this application. The processing method is applied to a processing apparatus. The processing apparatus includes a scheduler, a mapper, and M first processing units. The mapper corresponds to N second processing units. The processing apparatus is integrated on a first chip, and the N second processing units are integrated on a second chip. M and N are integers greater than 0. In addition, the processing method is applicable to any one of the processing apparatuses in FIG. 2 to FIG. 10. As shown in FIG. 12, the processing method may include the following step S1201 to step S1204.

S1201: Receive, through the scheduler, a target task that carries a chip identifier.

The target task is received through the scheduler. The target task carries the chip identifier. The chip identifier identifies a chip for executing the target task. Optionally, the target task further carries a task attribute.

S1202: Map computing resource status information of the N second processing units in the second chip to the first chip through the mapper.

A specific implementation of mapping the computing resource status information of the N second processing units in the second chip to the first chip through the mapper may be:
receiving, through the mapper, the target task sent by the scheduler; sending the target task to one or more target processing units for execution; determining a computing resource status of the N second processing units based on a quantity of tasks sent to the N second processing units and a quantity of tasks that have been completed by the N second processing units; and mapping the computing resource status information of the N second processing units. Optionally, information about the target task sent to the one or more target processing units is stored through the mapper. The information about the target task is used for maintenance or exception query of the target task.

Alternatively, computing resource status information sent by each second processing unit in the N second processing units is received through the mapper; and the computing resource status information of the N second processing units is mapped.

Specifically, the mapper may include K mapping modules, where K is an integer greater than 0. The K mapping modules correspond to the N second processing units. Specifically: when N = K, one mapping module corresponds to one second processing unit; when N > K, one mapping module corresponds to a plurality of second processing units; or when N < K, a plurality of mapping modules correspond to one second processing unit.

Computing resource status information of one second processing unit is mapped through one mapping module when one mapping module corresponds to one second processing unit,. Alternatively, computing resource status information of a plurality of second processing units is mapped through one mapping module when one mapping module corresponds to a plurality of second processing units. Alternatively, computing resource status information of a processing subunit in one second processing unit is mapped through a plurality of mapping modules when a plurality of mapping modules correspond to one second processing unit.

That computing resource status information of one second processing unit is mapped through a plurality of mapping modules when a plurality of mapping modules correspond to one second processing unit includes: mapping computing resource status information of a plurality of processing subunits in one second processing unit through the plurality of mapping modules, where one mapping module corresponds to one processing subunit.

That computing resource status information of one second processing unit is mapped through a plurality of mapping modules when a plurality of mapping modules correspond to one second processing unit includes: mapping computing resource status information of a plurality of queues in one second processing unit through the plurality of mapping modules, where one mapping module corresponds to one queue.

S 1203: Determine one or more target processing units from the M first processing units or the N second processing units through the scheduler based on the chip identifier, computing resource status information fed back by the M first processing units, and the computing resource status information of the N second processing units in the mapper.

In an implementation, if the target task carries the chip identifier, the scheduler determines, based on the chip identifier, that there is no limitation on a chip for executing the target task, and determines, from the M first processing units or the N second processing units, a processing unit with an idle computing resource.

In another implementation, if the target task carries a first chip identifier, one or more target processing units are determined from the M first processing units through the scheduler, and when there is no processing unit with an idle computing resource in the M first processing units, one or more target processing units are determined from the N second processing units, where the first chip identifier identifies that the target task is preferentially executed in the first chip.

In still another implementation, if the target task carries a second chip identifier, the scheduler determines one or more target processing units from the N second processing units, and when there is no processing unit with an idle computing resource in the N second processing units, determines the one or more target processing units from the M first processing units, where the second chip identifier identifies that the target task is preferentially executed in the second chip.

Optionally, when the target task further carries a task attribute, the target processing unit is a first processing unit or a second processing unit that matches the task attribute and that has an idle computing resource.

It may be understood that any one first processing unit in the M first processing units is any one of the following: a CPU processing unit CPU, an image processing accelerator, an image encoding/decoding accelerator, and an artificial intelligence AI computing unit. Alternatively, any one second processing unit in the N second processing units is any one of the following: a CPU, an image processing accelerator, an image encoding/decoding accelerator, and an AI computing unit.

S1204: Send the target task to the one or more target processing units through the scheduler for execution.

It should be noted that for a specific procedure of the processing method described in embodiments of this application, refer to related descriptions in the embodiments in FIG. 2 to FIG. 11. Details are not described herein again.

FIG. 13 is a schematic diagram of a structure of a chip system according to an embodiment of this application. As shown in FIG. 13, the chip system 1300 includes a processing apparatus 1301 and at least one second chip (chip B) 1302. The processing apparatus 1301 may include a scheduler, a mapper, and M first processing units. The at least one second chip 1302 may include N second units, and M and N are integers greater than 0. The processing apparatus 1301 may be integrated on a first chip (chip A), and the mapper may correspond to N second processing units included in the at least one second chip 1302.

The N second processing units are configured to receive a target task sent by the scheduler and execute the target task. Any one second processing unit in the N second processing units is any one of the following: a CPU, an image processing accelerator, an image encoding/decoding accelerator, and an AI computing unit.

Optionally, the N second processing units are further configured to send an execution result of the target task to the mapper.

Optionally, the N second processing units are further configured to send computing resource status information to the mapper.

It should be noted that for the chip system described in this embodiment of this application, refer to related descriptions of the processing apparatus in the embodiments in FIG. 2 to FIG. 11 and the N second processing units. Details are not described herein again.

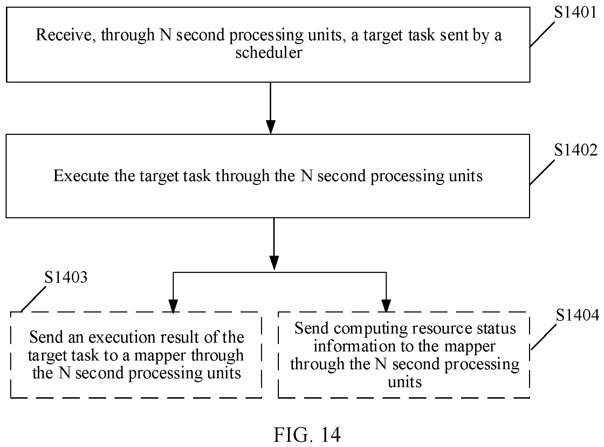

FIG. 14 is a schematic flowchart of another processing method according to an embodiment of this application. The processing method is applied to a chip system, and the chip system includes a processing apparatus and at least one second chip. The processing apparatus may include a scheduler, a mapper, and M first processing units. The at least one second chip 1302 may include N second units, and M and N are integers greater than 0. The processing apparatus may be integrated on a first chip, and the mapper may correspond to N second processing units included in the at least one second chip. As shown in FIG. 14, the processing method may include the following step S 1401 to step S1404.

S1401: Receive, through the N second processing units, a target task sent by the scheduler.

S1402: Execute the target task through the N second processing units.

S1403: Send an execution result of the target task to the mapper through the N second processing units.

S1404: Send computing resource status information to the mapper through the N second processing units.

It should be noted that for a specific procedure of the processing method described in embodiments of this application, refer to related descriptions of the N second processing units in the embodiments in FIG. 2 to FIG. 11. Details are not described herein again.

An embodiment of this application further provides a computer storage medium. The computer storage medium may store a program, and when the program is executed, some or all of the steps included in any one of the foregoing method embodiments are performed.

An embodiment of this application further provides a computer program. The computer program includes instructions, and when the computer program is executed by a computer, the computer is enabled to perform some or all of the steps of any processing method.

In the foregoing embodiments, the description of each embodiment has its emphasis, and for parts that are not described in detail in an embodiment, reference may be made to the relevant description of other embodiments.

It should be noted that for brief description, the foregoing method embodiments are described as a series of actions. However, a person skilled in the art should understand that this application is not limited to the described order of the actions, because according to this application, some steps may be performed in another order or simultaneously. In addition, a person skilled in the art should also aware that the described embodiments all belong to preferable embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented via some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The software product is stored in a storage medium and includes several instructions for instructing a computer device (which may be a personal computer, a server, or a network device, and may be specifically a processor in a computer device) to perform all or some of the steps of the foregoing methods described in the embodiments of this application. The foregoing storage medium may include any medium that can store program code, such as a USB flash drive, a removable hard disk, a magnetic disk, an optical disc, and a read-only memory (Read-Only Memory, abbreviated as ROM), or random access memory (Random Access Memory, abbreviated as RAM).

## Claims

1. A processing apparatus, wherein the processing apparatus comprises a scheduler, a mapper, and M first processing units; the mapper corresponds to N second processing units; the processing apparatus is integrated on a first chip, and the N second processing units are integrated on at least one second chip; and M and N are integers greater than 0, wherein
the scheduler is configured to receive a target task, the target task carries a chip identifier, and the chip identifier identifies a chip for executing the target task;
the mapper is configured to map computing resource status information of the N second processing units in the at least one second chip to the first chip; and
the scheduler is further configured to:
determine one or more target processing units from the M first processing units or the N second processing units based on the chip identifier, computing resource status information fed back by the M first processing units, and the computing resource status information of the N second processing units in the mapper; and
send the target task to the one or more target processing units for execution.

2. The apparatus according to claim 1, wherein the scheduler is specifically configured to:
when the chip identifier is a first chip identifier, determine the one or more target processing units from the M first processing units, and when there is no processing unit with an idle computing resource in the M first processing units, determine the one or more target processing units from the N second processing units, wherein the first chip identifier identifies that the target task is preferentially executed in the first chip.

3. The apparatus according to claim 1, wherein the scheduler is specifically configured to:
when the chip identifier is a second chip identifier, determine the one or more target processing units from the N second processing units, and when there is no processing unit with an idle computing resource in the N second processing units, determine the one or more target processing units from the M first processing units, wherein the second chip identifier identifies that the target task is preferentially executed in the second chip.

4. The apparatus according to claim 1, wherein the mapper comprises K mapping modules, wherein K is an integer greater than 0; and the K mapping modules correspond to the N second processing units, wherein
when N = K, one mapping module corresponds to one second processing unit;
when N > K, one mapping module corresponds to a plurality of second processing units; or
when N < K, a plurality of mapping modules correspond to one second processing unit.

5. The apparatus according to claim 4, wherein
when one mapping module corresponds to one second processing unit, one mapping module is configured to map computing resource status information of one second processing unit; or
when one mapping module corresponds to a plurality of second processing units, one mapping module is configured to map computing resource status information of a plurality of second processing units; or
when a plurality of mapping modules correspond to one second processing unit, a plurality of mapping modules are configured to map computing resource status information of one second processing unit.

6. The apparatus according to claim 5, wherein when a plurality of mapping modules correspond to one second processing unit, the plurality of mapping modules are specifically configured to map computing resource status information of a plurality of processing subunits in one second processing unit, wherein one mapping module corresponds to one processing subunit.

7. The apparatus according to claim 5, wherein when a plurality of mapping modules correspond to one second processing unit, the plurality of mapping modules are specifically configured to map computing resource status information of a plurality of queues in one second processing unit, wherein one mapping module corresponds to one queue.

8. The apparatus according to any one of claims 1 to 7, wherein the one or more target processing units are one or more processing units in the N second processing units, and the mapper is specifically configured to:
receive the target task sent by the scheduler;
send the target task to the one or more target processing units for execution;
determine a computing resource status of the N second processing units based on a quantity of tasks sent to the N second processing units and a quantity of tasks that have been completed by the N second processing units; and
map the computing resource status information of the N second processing units.

9. The apparatus according to claim 8, wherein the mapper is further configured to:
store information about the target task sent to the target processing unit, wherein the information about the target task is used for maintenance or exception query of the target task.

10. The apparatus according to any one of claims 1 to 7, wherein the mapper is specifically configured to:
receive computing resource status information sent by each second processing unit in the N second processing units; and
map the computing resource status information of the N second processing units.

11. The apparatus according to any one of claims 1 to 10, wherein the target task further carries a task attribute, and the target processing unit is a first processing unit or a second processing unit that matches the task attribute and that has an idle computing resource.

12. The apparatus according to any one of claims 1 to 11, wherein any one first processing unit in the M first processing units is any one of the following: a CPU processing unit CPU, an image processing accelerator, an image encoding/decoding accelerator, and an artificial intelligence AI computing unit; or any one second processing unit in the N second processing units is any one of the following: a CPU, an image processing accelerator, an image encoding/decoding accelerator, and an AI computing unit.

13. A processing method, applied to a processing apparatus, wherein the processing apparatus comprises a scheduler, a mapper, and M first processing units; the mapper corresponds to N second processing units; the processing apparatus is integrated on a first chip, and the N second processing units are integrated on at least one second chip; and M and N are integers greater than 0; and the method comprises:
receiving a target task through the scheduler, wherein the target task carries a chip identifier, and the chip identifier identifies a chip for executing the target task;
mapping computing resource status information of the N second processing units in the at least one second chip to the first chip through the mapper;
determining one or more target processing units from the M first processing units or the N second processing units through the scheduler based on the chip identifier, computing resource status information fed back by the M first processing units, and the computing resource status information of the N second processing units in the mapper; and
sending the target task to the one or more target processing units for execution.

14. The method according to claim 13, wherein the determining one or more target processing units from the M first processing units or the N second processing units through the scheduler based on the chip identifier, computing resource status information fed back by the M first processing units, and the computing resource status information of the N second processing units in the mapper comprises:
when the chip identifier is a first chip identifier, determining the one or more target processing units from the M first processing units through the scheduler, and when there is no processing unit with an idle computing resource in the M first processing units, determining the one or more target processing units from the N second processing units, wherein the first chip identifier identifies that the target task is preferentially executed in the first chip.

15. The method according to claim 13, wherein the determining one or more target processing units from the M first processing units or the N second processing units through the scheduler based on the chip identifier, computing resource status information fed back by the M first processing units, and the computing resource status information of the N second processing units in the mapper comprises:
when the chip identifier is a second chip identifier, determining the one or more target processing units from the N second processing units through the scheduler, and when there is no processing unit with an idle computing resource in the N second processing units, determining the one or more target processing units from the M first processing units, wherein the second chip identifier identifies that the target task is preferentially executed in the second chip.

16. The method according to claim 13, wherein the mapper comprises K mapping modules, wherein K is an integer greater than 0; and the K mapping modules correspond to the N second processing units, wherein
when N = K, one mapping module corresponds to one second processing unit;
when N > K, one mapping module corresponds to a plurality of second processing units; or
when N < K, a plurality of mapping modules correspond to one second processing unit.

17. The method according to claim 16, wherein
computing resource status information of one second processing unit is mapped through one mapping module when one mapping module corresponds to one second processing unit; or
computing resource status information of a plurality of second processing units is mapped through one mapping module when one mapping module corresponds to a plurality of second processing units; or
computing resource status information of one second processing unit is mapped through a plurality of mapping modules when a plurality of mapping modules correspond to one second processing unit.

18. The method according to claim 17, wherein that when a plurality of mapping modules correspond to one second processing unit, computing resource status information of one second processing unit is mapped through a plurality of mapping modules comprises:
mapping computing resource status information of a plurality of processing subunits in one second processing unit through the plurality of mapping modules, wherein one mapping module corresponds to one processing subunit.

19. The method according to claim 17, wherein that when a plurality of mapping modules correspond to one second processing unit, computing resource status information of one second processing unit is mapped through a plurality of mapping modules comprises:
mapping computing resource status information of a plurality of queues in one second processing unit through the plurality of mapping modules, wherein one mapping module corresponds to one queue.

20. The method according to any one of claims 13 to 19, wherein the one or more target processing units are one or more processing units in the N second processing units, and the mapping computing resource status information of the N second processing units in the second chip to the first chip through the mapper comprises:
through the mapper:
receiving the target task sent by the scheduler;
sending the target task to the one or more target processing units for execution;
determining a computing resource status of the N second processing units based on a quantity of tasks sent to the N second processing units and a quantity of tasks that have been completed by the N second processing units; and
mapping the computing resource status information of the N second processing units.

21. The method according to claim 20, wherein the method further comprises:
storing, through the mapper, information about the target task sent to the one or more target processing units, wherein the information about the target task is used for maintenance or exception query of the target task.

22. The method according to any one of claims 13 to 19, wherein the mapping computing resource status information of the N second processing units in the second chip to the first chip through the mapper comprises:
through the mapper:
receiving computing resource status information sent by each second processing unit in the N second processing units; and
mapping the computing resource status information of the N second processing units.

23. The method according to any one of claims 13 to 22, wherein the target task further carries a task attribute, and the target processing unit is a first processing unit or a second processing unit that matches the task attribute and that has an idle computing resource.

24. The method according to any one of claims 13 to 22, wherein any one first processing unit in the M first processing units is any one of the following: a CPU processing unit CPU, an image processing accelerator, an image encoding/decoding accelerator, and an artificial intelligence AI computing unit; or any one second processing unit in the N second processing units is any one of the following: a CPU, an image processing accelerator, an image encoding/decoding accelerator, and an AI computing unit.

25. A chip system, comprising the processing apparatus according to any one of claims 1 to 12 and at least one second chip, wherein the at least one second chip comprises N second processing units, and N is an integer greater than 0, wherein
the N second processing units are configured to:
receive a target task sent by the scheduler; and
execute the target task.

26. A computer-readable storage medium, wherein the computer-readable storage medium stores a computer program, and when the computer program is executed by a scheduler and a mapper in a processing apparatus, the method according to any one of claims 13 to 24 is implemented.

27. A computer program, wherein the computer-readable program comprises instructions, and when the computer program is executed by a processing apparatus, a scheduler and a mapper in the processing apparatus are enabled to perform the method according to any one of claims 13 to 24.
